# EUROPEAN PATENT SPECIFICATION

(11) **EP 4 628 286 B1**
(45) Date of publication and mention of the grant of the patent: **18.11.2026**
(21) Application number: 23897860.5
(22) Date of filing: 30.11.2023
(51) Int. Cl.: B29C 64/40, B29C 64/118, B33Y 70/00, C08L 29/04, C08L 53/02, C08F 218/08, C08F 216/06

(54) **SUPPORT MATERIAL**
TRÄGERMATERIAL
MATÉRIAU DE SUPPORT

(30) Priority: 02.12.2022 JP 2022193662
(43) Date of publication of application: 08.10.2025
(73) Proprietor: Mitsubishi Chemical Corporation, Tokyo 100-8251 (JP)
(72) Inventor: SAKAI, Norihito, Tokyo 100-8251 (JP); MUTA, Takatoshi, Tokyo 100-8251 (JP); UEDA, Koudai, Tokyo 100-8251 (JP)
(74) Representative: Vossius & Partner Patentanwälte Rechtsanwälte mbB
(86) International application number: PCT/JP2023/042873
(87) International publication number: WO 2024/117214

(56) References cited:
- WO-A1-2015/182681
- WO-A1-2018/061694
- WO-A1-2021/200153
- WO-A1-2021/200153
- US-A1- 2011 168 044
- US-A1- 2017 087 775
- US-A1- 2019 211 200

## Description

### TECHNICAL FIELD

The present disclosure relates to a support material that is used in additive manufacturing and is eventually removed. Specifically, the present disclosure relates to a support material with excellent heat resistance in high-temperature environments.

### BACKGROUND ART

Additive manufacturing is a method of building a three-dimensional object with a predetermined structure using a model material, in which a fluid model material is extruded and solidified to form a layer, and then the model material is further deposited on the layer to build an object layer by layer. The additive manufacturing includes a UV curing method and a fused deposition modeling method, among which the fused deposition modeling method is widely used because its device structure is simple and a wide variety of model material resins are available.

The support material used in additive manufacturing is an auxiliary material for infilling an intended three-dimensional structure when a three-dimensional object is built. There are a variety of three-dimensional structures built using model materials. Some structures include a section that needs to be supported by something else, otherwise it would fail to be built during the process of building. The support material for use in additive manufacturing is used for supporting such a section of the three-dimensional structure during the process of building and is eventually removed.

As for the technique for removing the support material, a support material that can be removed by dissolution in a solvent after building has been proposed in terms of workability and good surface smoothness of the built object (see, for example, JP-A-2014-24329). As the support material, for example, the use of a polyvinyl alcohol resin (hereafter, "polyvinyl alcohol" is also referred to as "PVA") has been proposed, which can be removed by washing with water (see, for example, WO-A-2015/182681). US 2019/211200 A1 and US 2017/087775 A1 disclose support materials for layered modelling comprising (A) a polyvinyl alcohol resin and (B) a block copolymer.

### RELATED ART DOCUMENT

### PATENT DOCUMENT

JP-A-2014-24329
WO-A-2015/182681

### SUMMARY

### PROBLEMS TO BE SOLVED BY THE DISCLOSURE

In recent years, additive manufacturing using the fused deposition modeling method has become widely popular, and there is a growing demand for using a support material that can be removed by washing with water and using a wide variety of model materials. In particular, attention is focusing on the use of engineering plastics and super engineering plastics (which hereinafter may be collectively referred to as "engineering plastic and the like") as model materials. The engineering plastics are highly reliable materials with excellent performance such as heat resistance and mechanical strength and can be used as industrial parts.

However, the engineering plastic and the like, for example, has a higher melting point than general-purpose plastics, and when it is used as a model material in the fused deposition modeling method, it is necessary to set the chamber temperature inside a closed system of an additive manufacturing device to a relatively high temperature in order to prevent inconvenience such as warping or cracking of the built object due to thermal contraction of the model material. If the chamber temperature of the additive manufacturing device is set to a relatively high temperature, the support material exposed to a high temperature environment may soften excessively, and the support material may fail to be fed properly from the nozzle head of the additive manufacturing device.

When the engineering plastic and the like having a higher melting point than general-purpose plastics is used as a model material, the interface between the model material and the support material may be thermally deformed, resulting in insufficient adhesion, which may make it difficult to maintain good buildability.

### MEANS FOR SOLVING THE PROBLEMS

The present disclosure is made in view of the above problem and provides a support material with excellent heat resistance, water solubility, and buildability.

The inventors of the present disclosure have conducted elaborate studies in view of the above situation and found that surprisingly, a support material with excellent heat resistance, water solubility, and buildability can be obtained by using an acid-modified PVA resin among various PVA resins (A) and by using a specific block copolymer in combination.

Specifically, the present disclosure provides the following [1] to [9].
[1] A support material containing: an acid-modified polyvinyl alcohol resin (A) with a modification degree of 0.01 to 10 mol%; and a block copolymer (B) having a polymer block (b1) of an aromatic vinyl compound, and at least one of a polymer block (b2) of a conjugated diene compound or isobutylene and a hydrogenation block (b3) resulting from hydrogeneration of the conjugated diene compound or isobutylene.
[2] The support material according to [1], wherein the acid-modified polyvinyl alcohol resin (A) is a sulfonic acid-modified polyvinyl alcohol resin (A1).
[3] The support material according to [1] or [2], wherein the acid-modified polyvinyl alcohol resin (A) has a modification degree of 0.5 to 2.6 mol%.
[4] The support material according to any one of [1] to [3], wherein the block copolymer (B) is present in a proportion of 10 to 50% by mass of a total amount of the support material.
[5] The support material according to any one of [1] to [4], wherein a content ratio (A/B) of the acid-modified polyvinyl alcohol resin (A) to the block copolymer (B) is 55/45 to 85/15.
[6] The support material according to any one of [1] to [5], wherein the acid-modified polyvinyl alcohol resin (A) has a saponification degree of 75 to 99.9 mol%.
[7] The support material according to any one of [1] to [6], wherein the block copolymer (B) has an acid value of 0.5 to 10 mg CH₃ONa/g.
[8] The support material according to any one of [1] to [7], wherein the block copolymer (B) has a styrene content equal to or more than 50% by mass.
[9] A method for producing an additive manufactured object, the method including depositing the support material according to any one of [1] to [8] and a model material.

### EFFECTS OF THE DISCLOSURE

The present disclosure can provide a support material with excellent heat resistance, water solubility, and buildability.

### BRIEF DESCRIPTION OF DRAWINGS

FIG. 1 is a diagram illustrating an additive manufactured object for which buildability of a support material is evaluated according to an embodiment.
FIG. 2 is a diagram illustrating an additive manufactured object for which adhesion between a support material and a model material is evaluated according to an embodiment.

### EMBODIMENTS OF THE DISCLOSURE

The present disclosure will be described in more detail below based on exemplary embodiments of the present disclosure. However, the present disclosure is not limited to these embodiments.
In the present disclosure, "X to Y" (X and Y are each a given number) is intended to encompass "preferably more than X" or "preferably less than Y" unless otherwise specified, in addition to the meaning of "equal to or more than X and equal to or less than Y".

In the present disclosure, the expression "X and/or Y" (X and Y are each a given configuration) is intended to mean at least one of X and Y and mean the following three meanings: only X; only Y; and X and Y.

In the present disclosure, the term "main component" means a component that has a significant effect on the properties of a material, and the content of the component is usually equal to or more than 50% by weight of the entire material, preferably 50 to 90% by mass.

### <Support Material>

A support material according to one embodiment of the present disclosure (which hereinafter may be referred to as "the present support material") is characterized by containing an acid-modified polyvinyl alcohol resin (A) and a specific block copolymer (B) and has excellent heat resistance, water solubility, and buildability.

Therefore, even when the support material is subjected to a high-temperature environment, such as in the fused deposition modeling method that uses the engineering plastic and the like such as polyether ketone ketone as a model material, the support material does not soften excessively and is therefore useful in that it enables additive manufacturing.

Specifically, in additive manufacturing using the engineering plastic and the like having a higher melting point than general-purpose plastics such as polypropylene as a model material, if a model material is fed to a space with a low temperature such as room temperature for building an object, warping, cracking, and the like tend to occur in the built object. To solve this problem, it is customary to use a closed system of an additive manufacturing device, such as a 3D printer with a chamber, and to set the temperature inside the chamber to a high temperature (e.g., set the temperature inside the chamber to a high temperature of 60 to 150°C). In the closed system of the additive manufacturing device, for example, a support material in the form of filament is fed to a nozzle head (hot melting section) through a pair of feed rollers and supplied onto a platform. If the temperature in the chamber of the additive manufacturing device is set to a high temperature as described above, the support material tends to soften before reaching the nozzle head (hot melting section), causing unstable feeding through the feed rollers.

For example, the conventional support material disclosed in WO-A-2015/182681 softens excessively in a high-temperature environment. As a result, the support material fails to be properly fed from the nozzle head of the additive manufacturing device onto the platform, and in addition, deformation occurs during additive manufacturing. The conventional support material is therefore insufficient when the engineering plastic and the like is used as a model material.

Since the present support material does not soften excessively under the high temperature environment described above, for example, the support material in the form of filament can be fed to the nozzle head (hot melting section) through a pair of feed rollers and supplied onto the platform. Thus, the present support material is highly useful in the fused deposition modeling method using the engineering plastic and the like as a model material.

The present support material is particularly useful because of its excellent buildability even when additive manufacturing is performed using the engineering plastic and the like as a model material.

Further, the present support material is convenient in that its removal and disposal after additive manufacturing is easy, because of its excellent water solubility. In addition, the surface condition of the built object is good.

Further, the present support material has good adhesion to various model materials other than the engineering plastic and the like. Whether the engineering plastic and the like or the general-purpose plastic is used as a model material, the present support material has good adhesion to a model material. The present support material is therefore useful in that it can be used in combination with various model materials ranging from engineering plastic and the like to general-purpose plastic.

In the following, the present support material will be described in detail.

The acid-modified PVA resin (A) to be used in the present support material is a polyvinyl alcohol resin having an acid-modified group, and examples include maleic acid-modified polyvinyl alcohol resin, itaconic acid-modified polyvinyl alcohol resin, acrylic acid-modified polyvinyl alcohol resin, methacrylic acid-modified polyvinyl alcohol resin, and sulfonic acid-modified polyvinyl alcohol resin. These can be used alone or in combination of two or more.

Among those, a sulfonic acid-modified polyvinyl alcohol resin is preferred in terms of heat resistance and water solubility.

The modification degree of the acid-modified PVA resin (A) is controlled in the range of 0.01 to 10 mol% to achieve both heat resistance and water solubility. The modification degree is more preferably 0.1 to 5 mol%, even more preferably 0.5 to 2.6 mol%, particularly preferably 1.0 to 2.2 mol%, especially preferably 1.2 to 2.0 mol%. If the modification degree is too low, water solubility tends to decrease, and buildability tends to decrease due to reduced compatibility with the specific block copolymer (B). If the modification degree is too high, heat resistance tends to decrease.

Exemplary methods for producing the acid-modified PVA resin (A) include: (1) a method in which a vinyl ester monomer and an unsaturated monomer containing an acid component-containing group or the like are copolymerized and the copolymer is saponified; (2) a method in which a compound having a functional group such as alcohol, aldehyde, or thiol having an acid component-containing group or a group containing a salt of the acid component is polymerized with a vinyl ester monomer in the presence of a chain transfer agent, and the polymer is saponified; and (3) a method in which a PVA resin is acetalized with an aldehyde compound having an acid component-containing group or a group containing a salt of the acid component.

Among those, the method (1) in which a vinyl ester monomer and an unsaturated monomer containing an acid component-containing group or the like are copolymerized and the copolymer is saponified is preferred in terms of safety and workability during production.

Examples of the unsaturated monomer containing the acid component-containing group or the like include polymerizable monocarboxylic acids such as methacrylic acid, crotonic acid, and isocrotonic acid, and esters of the polymerizable monocarboxylic acids, polymerizable dicarboxylic acids such as maleic acid, fumaric acid, and itaconic acid, polymerizable dicarboxylic anhydrides such as maleic anhydride, aliphatic vinyl esters and the like, and vinyl monomers containing sulfonic acid groups such as olefin sulfonic acids such as ethylene sulfonic acid and allylsulfonic acid, 2-acrylamido-2-methylpropanesulfonic acid, 2-acrylamido-1-methylsulfonic acid, and 2-methacrylamido-2-methylpropanesulfonic acid.

The saponification degree (measured in conformity with JIS K6726) of the acid-modified PVA resin (A) to be used in the present support material is preferably 75 to 99.9 mol%, more preferably 78 to 95 mol%, even more preferably 80 to 90 mol%. If the saponification degree is too low, crystallinity and heat resistance tend to decrease, and compatibility with the block copolymer (B) tends to be too high, causing suspended solids during dissolution in water.

The number average polymerization degree (measured in conformity with JIS K 6726) of the acid-modified PVA resin (A) is preferably 150 to 4000, more preferably 250 to 1000, even more preferably 300 to 500. If the number average polymerization degree is too low, the filament has lower strength and tends to break during winding and building. If the number average polymerization degree is too high, water solubility decreases significantly, and in addition, buildability and filament formability tend to deteriorate.

The proportion of the acid-modified PVA resin (A) in the present support material is, for example, preferably 50 to 90% by mass of the total amount of the present support material (100% by mass), more preferably 55 to 85% by mass, even more preferably 58 to 82% by mass. If the proportion of the acid-modified PVA resin (A) is too low, water solubility tends to decrease.

### [Sulfonic Acid-Modified PVA Resin (A1)]

In the present support material, when the acid-modified PVA resin (A) which is the main component is in particular a sulfonic acid-modified PVA resin (A1), remarkable effects are achieved in heat resistance and water solubility. The sulfonic acid modification degree (the proportion of a structural unit having a sulfonic acid group or a group containing a salt of the sulfonic acid group) is preferably controlled in the range of 0.01 to 10 mol%.

For example, when an unmodified PVA resin or a 1,2-diol-modified PVA resin is used as the PVA resin, or when a sulfonic acid-modified PVA resin with the sulfonic acid modification degree outside the above range is used, it is difficult to achieve both heat resistance and water solubility at a degree as high as in the present support material.

In order to achieve both heat resistance and water solubility at a high degree, the modification degree of the sulfonic acid-modified PVA resin (A1) in the present support material is more preferably 0.1 to 5 mol%, further preferably 0.5 to 2.6 mol%, even more preferably 1.0 to 2.5 mol%, particularly preferably 1.0 to 2.2 mol%, especially preferably 1.2 to 2.0 mol%. If the modification degree is too low, water solubility tends to decrease, and buildability tends to decrease due to reduced compatibility with the specific block copolymer (B). If the modification degree is too high, heat resistance tends to decrease.

The sulfonic acid-modified PVA resin (A1) to be used in the present support material is a PVA resin having a sulfonic acid group or a group containing a salt of the sulfonic acid group. For example, the sulfonic acid-modified PVA resin (A1) has a vinyl alcohol unit represented by formula (1) below, which is a basic structural unit of a PVA resin, and if the saponification degree is less than 100%, a vinyl ester unit represented by formula (2) below that corresponds to an unsaponified portion, as well as a structural unit including a sulfonic acid group or a group containing a salt of the sulfonic acid group represented by formula (3-1), (3-2), or (3-3) below in its side chain.

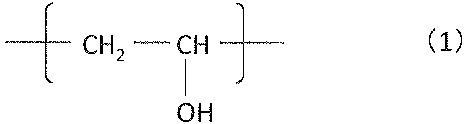

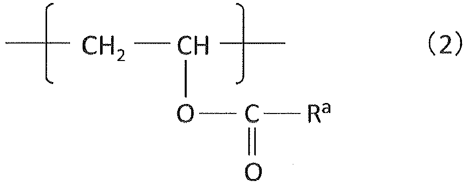

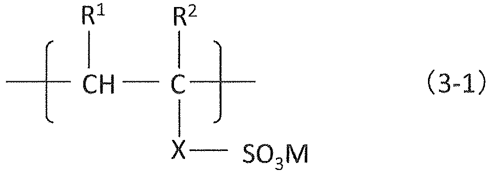

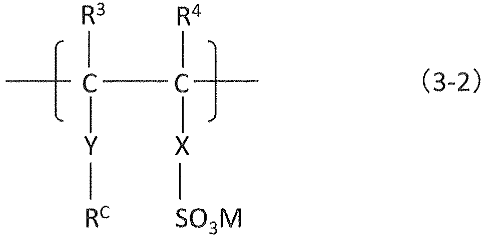

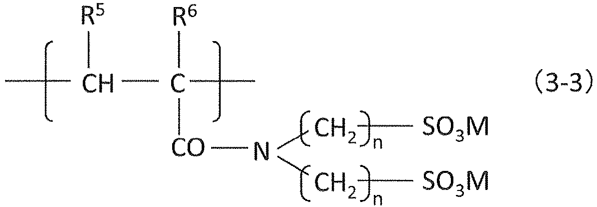

The vinyl alcohol unit represented by formula (1) and the vinyl ester unit represented by formula (2) are derived from a vinyl ester compound used as a raw material monomer for a PVA resin.

Examples of the vinyl ester compound used as a vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. Among those, vinyl acetate is preferred in terms of cost efficiency.

In formula (2), R^{a} is an alkyl group having 1 to 18 carbon atoms and depends on the vinyl ester compound used as a synthetic raw material for the PVA resin. R^{a} is preferably a methyl group, and a preferred vinyl ester unit is a vinyl acetate unit represented by formula (2a) below.

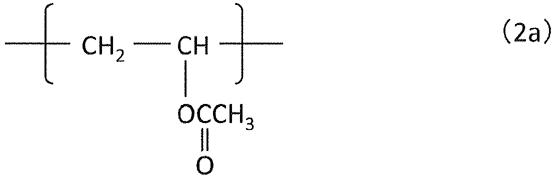

In formulae (3-1), (3-2), and (3-3), "-SO₃M" (where M represents hydrogen or an alkali metal or an ammonium group) corresponds to a sulfonic acid group-containing group when M is hydrogen, and corresponds to a group containing a salt of the sulfonic acid group when M is an alkali metal or ammonium. In the formulae, R¹, R², R³, R⁴, R⁵, and R⁶ are each independently hydrogen or an alkyl group having 1 to 4 carbon atoms. X and Y are each an intervening group and usually an alkylene group having 1 to 4 carbon atoms, an ester bond, an amide bond, an ether bond, or the like. R^{c} may be hydrogen, an alkyl group, a sulfonic acid group or a group containing a salt of the sulfonic acid group ("-SO₃M" (where M represents hydrogen or an alkali metal or an ammonium group)), or a group containing -SO₃M.

The structural unit having a sulfonic acid group or a group containing a salt of the sulfonic acid group in formula (3-1) is formed, for example, by using an unsaturated monomer having a sulfonic acid group or a group containing a salt of the sulfonic acid group (hereinafter referred to as "unsaturated monomer containing the sulfonic acid group or the like"), such as olefin sulfonic acid represented by formula (4-1) below, sulfoalkyl(meth)acrylamide represented by formula (4-2) or (4-3), sulfoalkyl(meth)acrylate represented by formula (4-4). The intervening group X is an alkylene group (-(CH₂)n-), an ester bond (-COO-), a carbonyl bond (-CO-), an amide bond, or a combination thereof, depending on the type of the unsaturated monomer containing the sulfonic acid group or the like to be used.

CH₂ = CH -X - SO₃M (4-1)

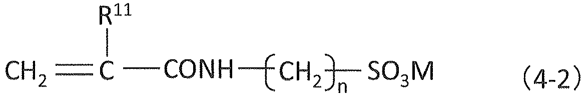

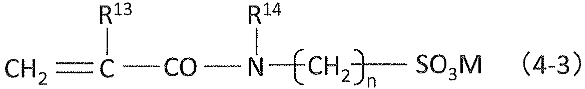

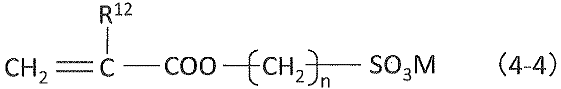

In formulae (4-1), (4-2), (4-3), and (4-4) above, R¹¹, R¹², R¹³, and R¹⁴ are each independently hydrogen or an alkyl group having 1 to 4 carbon atoms. Here, n is an integer of 2 to 4, and M represents a hydrogen atom or an alkali metal or an ammonium group.

The structural unit having a sulfonic acid group or a group containing a salt of the sulfonic acid group in formula (3-2) is formed, for example, by using sulfoalkylmalate or the like represented by formula (5-1) or (5-2) below as the unsaturated monomer containing the sulfonic acid group or the like. The structural unit having a sulfonic acid group or a group containing a salt of the sulfonic acid group in formula (3-3) is formed, for example, by using sulfoalkyl(meth)acrylamide represented by formula (5-3) below as the unsaturated monomer containing the sulfonic acid group or the like.

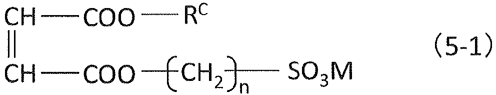

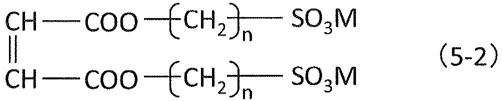

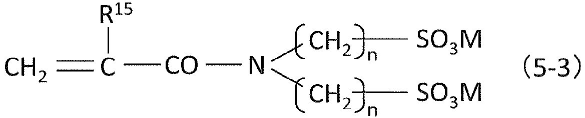

In formulae (5-1) and (5-2) above, n is an integer of 2 to 4 and M represents a hydrogen atom or an alkali metal or an ammonium group.

In formula (5-3) above, R¹⁵ is hydrogen or an alkyl group having 1 to 4 carbon atoms. Here, n is an integer of 2 to 4, and M represents a hydrogen atom or an alkali metal or an ammonium group.

Specific examples of the olefin sulfonic acid include olefin sulfonic acids such as vinyl sulfonic acid, allylsulfonic acid, and metallylsulfonic acid, and salts thereof.

Specific examples of the sulfoalkylmalate include sodium sulfopropyl-2-ethylhexylmalate, sodium sulfopropyl-2-ethylhexylmalate, sodium sulfopropyl tridecylmalate, and sodium sulfopropyl eicosylmalate.

Specific examples of the sulfoalkyl(meth)acrylamide include sodium sulfomethylacrylamide, sodium sulfo-t-butylacrylamide, sodium sulfo-s-butylacrylamide, and sodium sulfo-t-butylmethacrylamide.

Further, specific examples of the sulfoalkyl(meth)acrylate include sodium sulfoethyl acrylate. When introduced by copolymerization, olefin sulfonic acid or a salt thereof is preferably used among the unsaturated monomers containing the sulfonic acid group or the like.

The saponification degree (measured in conformity with JIS K6726) of the sulfonic acid-modified PVA resin (A1) to be used in the present support material is preferably 75 to 99.9 mol%, more preferably 78 to 95 mol%, even more preferably 80 to 90 mol%. If the saponification degree is too low, crystallinity and heat resistance tend to decrease, and compatibility with the block copolymer (B) tends to be too high, causing suspended solids during dissolution in water.

The number average polymerization degree (measured in conformity with JIS K 6726) of the sulfonic acid-modified PVA resin (A1) is preferably 150 to 4000, more preferably 250 to 1000, even more preferably 300 to 500. If the number average polymerization degree is too low, the filament has lower strength and tends to break during winding and building. If the number average polymerization degree is too high, water solubility decreases significantly, and in addition, buildability and filament formability tend to deteriorate.

Exemplary methods for producing the sulfonic acid-modified PVA resin (A1) include: (1) a method in which a vinyl ester monomer and an unsaturated monomer containing a sulfonic acid group or the like are copolymerized and the copolymer is saponified; (2) a method in which a compound having a functional group such as alcohol, aldehyde, or thiol having a sulfonic acid group or a group containing a salt of the sulfonic acid group is polymerized with a vinyl ester monomer in the presence of a chain transfer agent, and the polymer is saponified; (3) a method in which a PVA resin is treated with bromine, iodine, or the like and then the treated PVA resin is heated in an acidic sodium sulfite solution; (4) a method in which a PVA resin is heated in a concentrated sulfuric acid solution; and (5) a method in which a PVA resin is acetalized with an aldehyde compound having a sulfonic acid group or a group containing a salt of the sulfonic acid group.

Among those, the method (1) in which a vinyl ester monomer and an unsaturated monomer containing a sulfonic acid group or the like are copolymerized and the resulting copolymer is saponified is preferred in terms of safety and workability during production.

In addition to the vinyl ester monomer and oxyalkylene group-donating vinyl monomer, for example, the sulfonic acid-modified PVA resin (A1) may be copolymerized with the following monomers (other monomers) in the range equal to or less than 1 mol%. Examples of the other monomers include olefins such as ethylene, propylene, isobutylene, α-octene, α-dodecene, and α-octadecene; hydroxy group-containing α-olefins such as 3-buten-1-ol, 4-penten-1-ol, 5-hexen-1-ol, and 3,4-dihydroxy-1-butene, and acylation products and other derivatives of these hydroxy group-containing α-olefins; unsaturated acids such as acrylic acid, methacrylic acid, crotonic acid, maleic acid, maleic anhydride, itaconic acid, undecylenic acid, and salts, monoesters, and dialkyl esters of these unsaturated acids; nitriles such as acrylonitrile and metaacrylonitrile; amides such as acrylamide and methacrylamide; olefin sulfonic acids such as ethylene sulfonic acid, allylsulfonic acid, and metallylsulfonic acid, and salts of these olefin sulfonic acids; alkyl vinyl ethers; vinyl compounds such as dimethylallyl vinyl ketone, N-vinylpyrrolidone, vinyl chloride, vinyl ethylene carbonate, 2,2-dialkyl-4-vinyl-1,3-dioxolane, and glycerin monoallyl ether; substituted vinyl acetates such as isopropenyl acetate and 1-methoxyvinyl acetate, vinylidene chloride, 1,4-diacetoxy-2-butene, 1,4-dihydroxy-2-butene, and vinylene carbonate.

The method for copolymerization of the vinyl ester monomer with the known unsaturated monomer containing the sulfonic acid group or the like and the other monomers to be added as needed is not particularly limited, and a known method such as bulk polymerization, solution polymerization, suspension polymerization, dispersion polymerization, or emulsion polymerization can be employed. Solution polymerization is typically used.

The method for charging a monomer component during copolymerization is not particularly limited, and any method such as batch charge, installment charge, or continuous charge can be employed.

Typical examples of a solvent used in such copolymerization include lower alcohols such as methanol, ethanol, isopropyl alcohol, n-propanol, and butanol, and ketones such as acetone and methyl ethyl ketone. Among those, alcohol having 1 to 3 carbon atoms, especially methanol, is preferably used for industrial use.

The amount of solvent used may be selected as appropriate according to the degree of polymerization of the copolymer of interest, in consideration of the chain transfer constant of the solvent. For example, if the solvent is methanol, the amount of solvent used is selected in the range of solvent/monomer = 0.01 to 10 (mass ratio), preferably 0.05 to 3 (mass ratio).

For copolymerization, a polymerization catalyst is used. Examples of the polymerization catalyst include known radical polymerization catalysts such as azobisisobutyronitrile, acetyl peroxide, benzoyl peroxide, and lauryl peroxide, and low temperature active radical polymerization catalysts such as azobis methylvaleronitrile and azobis dimethoxydimethylvaleronitrile. The amount of polymerization catalyst used depends on the type of catalyst and is not generally determined, but is selected as desired according to the polymerization rate. For example, when azoisobutyronitrile or acetyl peroxide is used, the amount of polymerization catalyst is preferably 0.01 to 1.0 mol% of the vinyl ester monomer, particularly preferably 0.02 to 0.5 mol%.

The copolymerization reaction is performed at a reaction temperature of about 30°C to boiling point, depending on the solvent used and pressure, and more specifically in the range of 35 to 150°C, preferably 40 to 75°C.

The resulting copolymer is then saponified. The saponification is performed by dissolving the copolymer obtained above in alcohol or hydrous alcohol and using an alkali or acid catalyst.

Examples of the alcohol include lower alcohols such as methanol, ethanol, propanol, and tert-butanol. Among those, alcohol having 1 to 3 carbon atoms, especially methanol, is preferred. The copolymer concentration in the alcohol is selected as appropriate according to the viscosity of the system and is typically selected in the range of 10 to 60% by mass. Examples of the catalyst used in the saponification include alkali catalysts such as alkali metal hydroxides such as sodium hydroxide, potassium hydroxide, sodium methylate, sodium ethylate, potassium methylate, and lithium methylate, and alcoholates; and acid catalysts such as sulfuric acid, hydrochloric acid, nitric acid, metasulfonic acid, zeolite, and cation exchange resins.

The amount of saponification catalyst used can be selected as appropriate according to the saponification method, the target saponification degree, and the like. Typically, when an alkali catalyst is used, the appropriate ratio is 0.1 to 30 millimoles, preferably 2 to 15 millimoles, per mole of the total amount of the vinyl ester monomer and the unsaturated monomer containing the sulfonic acid group or the like.

The reaction temperature of the saponification reaction is not particularly limited and is preferably 10 to 60°C (especially 20 to 50°C).

The sulfonic acid-modified PVA resin (A1) to be used in the present support material may include a single type of sulfonic acid-modified PVA resin (A1) or may include different types mixed as appropriate.

As described above, the sulfonic acid-modified PVA resin (A1) to be used in the present support material can be obtained. The sulfonic acid-modified PVA resin (A1) obtained as described above contains sodium acetate as a byproduct during synthesis. The sodium acetate content is equal to or more than 0.1 parts by mass per 100 parts by mass of the sulfonic acid-modified PVA resin (A1), preferably equal to or more than 0.3 part by mass, more preferably equal to or more than 0.5 parts by mass, and equal to or less than 2.0 parts by mass, preferably equal to or less than 1.5 parts by mass. The presence of sodium acetate in such an amount is preferred because if so, the contact area mildly decomposes during filament melting and thereby adhesion to the model material (material) can be improved.

The proportion of the sulfonic acid-modified PVA resin (A1) in the present support material is, for example, preferably 50 to 90% by mass of the total amount of the present support material (100% by mass), more preferably 55 to 85% by mass, even more preferably 58 to 82% by mass. If the proportion of the sulfonic acid-modified PVA resin (A1) is too low, water solubility tends to decrease.

### [Block Copolymer (B)]

The block copolymer (B) to be used in the present support material has a hard segment including a polymer block (b1) of an aromatic vinyl compound such as styrene, and a soft segment including at least one of a polymer block (b2) of a conjugated diene compound or isobutylene, and a block (b3) resulting from hydrogenation of some or all of double bonds remaining in the polymer block (b2).

In the present support material, the block copolymer (B) preferably has a functional group reactive with a hydroxyl group in its side chain. Specifically, the block copolymer (B) preferably has a carboxylic acid group or a derivative of the carboxylic acid group (which hereinafter may be simply referred to as "carboxylic acid group").

Where the hard segment is represented by X and the soft segment is represented by Y to show the block structure of the block copolymer (B), examples of the block copolymer include a diblock copolymer represented by X-Y, a triblock copolymer represented by X-Y-X or Y-X-Y, and a polyblock copolymer in which X and Y are alternately connected to each other. The block copolymer may have a linear structure or a branched structure. Among those, a linear triblock copolymer represented by X-Y-X is preferred for dynamic properties.

Exemplary monomers to be used to form the polymer block (b1) of the aromatic vinyl compound as the hard segment include styrene; alkylstyrenes such as α-methylstyrene, β-methylstyrene, o-methylstyrene, m-methylstyrene, p-methylstyrene, t-butylstyrene, 2,4-dimethylstyrene, and 2,4,6-trimethylstyrene; halogenated styrenes such as monofluorostyrene, difluorostyrene, monochlorostyrene, dichlorostyrene, and methoxystyrene; and vinyl compounds such as vinylnaphthalene, vinylanthracene, indene, acetonaphthylene having aromatic rings other than benzene rings, and derivatives of these vinyl compounds. The polymer block (b1) of the aromatic vinyl compound may be a homopolymer block of any of the monomers described above or a copolymer block of multiple monomers among the monomers described above. A homopolymer block of styrene is preferably used.

The polymer block (b1) of the aromatic vinyl compound may be a copolymer block obtained by copolymerization with a small amount of a monomer other than the aromatic vinyl compound, as long as the effects of the present disclosure are not impaired. Examples of the other monomer include olefins such as butene, pentene, and hexene, diene compounds such as butadiene and isoprene, vinyl ether compounds such as methyl vinyl ether, and allyl ether compounds. The copolymerization ratio of the other monomer is typically equal to or less than 10 mol% of the entire amount of the polymer block (b1).

The polymer block (b1) of the aromatic vinyl compound in the block copolymer typically has a weight average molecular weight of 10000 to 300000, particularly preferably 20000 to 200000, even more preferably 50000 to 100000.

Exemplary monomers to be used for formation of the polymer block (b2) of the conjugated diene compound or isobutylene as the soft segment include conjugated diene compounds such as 1,3-butadiene, isoprene (2-methyl-1,3-butadiene), 2,3-dimethyl-1,3-butadiene, and 1,3-pentadiene, and isobutylene, which may be used alone or in combination.

Among those, homopolymer blocks and copolymer blocks of isoprene, butadiene, and isobutylene are preferred. In particular, a homopolymer block of butadiene or isobutylene is preferably used.

The polymer block (b2) of the conjugated diene compound or isobutylene may have a plurality of bond forms due to polymerization. For example, butadiene forms a butadiene unit having a 1,2-bond (-CH₂-CH(CH=CH₂)-) and a butadiene unit having a 1,4-bond (-CH₂-CH=CH-CH₂-). The ratios of the units to be formed vary depending on the type of the conjugated diene compound and are not generally specified. In the case of butadiene, the ratio of the 1,2-bond-containing unit to be formed is typically 20 to 80 mol%.

Some or all of the double bonds remaining in the polymer block (b2) of the conjugated diene compound or isobutylene are hydrogenated, whereby the hydrogenation block (b3) is formed to improve the heat resistance and the weather resistance of the block copolymer (B). In this case, the hydrogenation ratio is preferably equal to or more than 50 mol%, particularly preferably equal to or more than 70 mol%.

For example, the butadiene unit having the 1,2-bond is hydrogenated into a butylene unit (-CH₂-CH(CH₂-CH₃)-), and the butadiene unit having the 1,4-bond is hydrogenated into two consecutive ethylene units (-CH₂-CH₂-CH₂-CH₂-). In general, the former unit is preferentially formed.

The polymer blocks (b2) and (b3) as the soft segment may each be a copolymer block obtained by copolymerization with a small amount of a monomer other than the monomers described above, as long as the effects of the present disclosure are not impaired. Examples of the other monomer include aromatic vinyl compounds such as styrene, olefins such as butene, pentene, and hexene, vinyl ether compounds such as methyl vinyl ether, and allyl ether compounds. The copolymerization ratio of the other monomer is typically equal to or less than 10 mol% of the entire amount of the polymer block.

The polymer block derived from the conjugated diene compound or isobutylene in the block copolymer typically has a weight average molecular weight of 10000 to 300000, particularly preferably 20000 to 200000, more preferably 50000 to 100000.

As described above, the block copolymer (B) to be used in the present support material includes the hard segment including the polymer block of the aromatic vinyl compound, and the soft segment including the polymer block of the conjugated diene compound or the polymer block resulting from the hydrogenation of some or all of the double bonds remaining in the polymer block of the conjugated diene compound, or the polymer block of isobutylene. Typical examples of the block copolymer (B) include a styrene-butadiene block copolymer (SBS) obtained by using styrene and butadiene as ingredients, a styrene-butadiene-butylene block copolymer (SBBS) obtained by hydrogenating the side chain double bond of the butadiene structural unit of the SBS, a styrene-ethylene-butylene block copolymer (SEBS) obtained by hydrogenating the main chain double bond, a styrene-isoprene block copolymer (SIPS) obtained by using styrene and isoprene as ingredients, and a styrene-isobutylene block copolymer (SIBS) obtained by using styrene and isobutylene as ingredients. Among those, SEBS and SIBS, which are excellent in thermal stability and weather resistance, are preferred.

The content ratio ((b1)/at least one of (b2) and (b3)) of the polymer block (b1) of the aromatic vinyl compound as the hard segment to at least one of the polymer blocks (b2) and (b3) as the soft segment in the block copolymer (B) is typically 30/70 to 70/30, particularly preferably 50/50 to 65/35, in terms of mass ratio. If the content ratio of the polymer block (b1) of the aromatic vinyl compound is too high, the resin tends to be hard and less flexible as a whole. On the other hand, if the content ratio of the polymer block (b1) of the aromatic vinyl compound is too low, adhesion to a hydrophobic resin tends to decrease.

The block copolymer (B) can be obtained by preparing a block copolymer having the polymer block (b1) of the aromatic vinyl compound and the polymer block (b2) of the conjugated diene compound or isobutylene and, if necessary, hydrogenating the double bonds of the polymer block of the conjugated diene compound.

First, a known method may be employed for producing the block copolymer having the polymer block (b1) of the aromatic vinyl compound and the polymer block (b2) of the conjugated diene compound or isobutylene. As an exemplary method, the aromatic vinyl compound and the conjugated diene compound or isobutylene are successively polymerized in an inert organic solvent with the use of an alkyllithium compound as an initiator.

Next, a known method may be employed for hydrogenating the block copolymer having the polymer block of the aromatic vinyl compound and the polymer block of the conjugated diene compound. Exemplary methods for the hydrogenation include a method using a reducing agent such as a boron hydride compound, and a hydrogen reduction method using a metal catalyst such as platinum, palladium or Raney nickel.

Preferably, the block copolymer (B) to be used in the present support material further has a block (b4) having a functional group reactive with a hydroxyl group in its side chain. The functional group is preferably a carboxylic acid group or a derivative of the carboxylic acid group. The use of the block copolymer having the functional group reactive with the hydroxyl group in its side chain makes it possible to provide a support material excellent in shape stability.

The carboxylic acid group content of the block copolymer (B) is preferably 0.5 to 10 mg CH₃ONa/g, particularly preferably 1 to 6 mg CH₃ONa/g, more preferably 1 to 2.5 mg CH₃ONa/g in terms of an acid value as measured by a titration method. If the acid value is low, the formability of the support material (formability of the filament) tends to decrease. On the other hand, if the acid value is high, the support material tends to have lower water solubility and also lose stability in melt viscosity.

The acid value of the block copolymer (B) may be adjusted to a desired level not only by adjusting the amount of the functional group to be introduced but also by mixing a block copolymer having the functional group and a block copolymer not having the functional group to adjust the content of the functional group.

A known method may be used for the introduction of the functional group including the carboxylic acid group into the block copolymer (B). For example, a method in which an α,β-unsaturated carboxylic acid or a derivative thereof is copolymerized in the production of the block copolymer, that is, in the copolymerization, or a method in which an α,β-unsaturated carboxylic acid or a derivative thereof is added to the block copolymer after the production of the block copolymer is preferably used. Exemplary methods for the addition include a method using a radical reaction in a solution in the presence or absence of a radical initiator, and a method of melt-kneading in an extruder.

Examples of the α,β-unsaturated carboxylic acid and the derivative thereof to be used for the introduction of the carboxylic acid group include α,β-unsaturated monocarboxylic acids such as acrylic acid and methacrylic acid and derivatives thereof; α,β-unsaturated dicarboxylic acids such as maleic acid, succinic acid, itaconic acid, and phthalic acid, and derivatives thereof; α,β-unsaturated monocarboxylates such as glycidyl acrylate, glycidyl methacrylate, hydroxyethyl acrylate, and hydroxymethyl methacrylate. Further, the carboxylic acid group introduced into the block copolymer (B) may form an acid anhydride structure with a neighboring carboxylic acid group. Examples of the acid anhydride include α,β-unsaturated dicarboxylic anhydrides such as maleic anhydride, succinic anhydride, itaconic anhydride, and phthalic anhydride.

The block copolymer (B) to be used in the present support material preferably has a styrene content of, for example, equal to or more than 50% by mass, more preferably 50 to 80% by mass, even more preferably 52 to 78% by mass, particularly preferably 55 to 75% by mass. If the styrene content of the block copolymer (B) is too low, adhesion to the model material tends to decrease.

The styrene content is the percentage (% by mass) of the styrene block in the block copolymer (B). The styrene content can be calculated, for example, by using proton nuclear magnetic resonance or infrared spectroscopy in conformity with JIS K6239. When two or more types of block copolymers (B) with different styrene contents are used, the styrene content is calculated as an average value based on the mass ratio.

The block copolymer (B) to be used in the present support material typically has a weight average molecular weight of 10000 to 1000000, particularly preferably 250000 to 700000, even more preferably 45000 to 550000.

The block copolymer (B) typically has a melt viscosity of 100 to 3000 mPa·s, particularly preferably 300 to 2000 mPa·s, even more preferably 800 to 1500 mPa·s at 220°C and a shear rate of 122 sec⁻¹.

If the weight average molecular weight is too large or too small, or the melt viscosity is too high or too low, it is impossible to obtain a desired morphology such that the block copolymer (B) is homogeneously dispersed in the sulfonic acid-modified PVA resin (A1), and the mechanical properties of the support material tend to decrease.

The weight average molecular weight of the block copolymer (B) is determined by gel permeation chromatography (GPC) based on polystyrene standard.

In the present support material, the block copolymer (B) may include a single type of block copolymer (B) or may include different types mixed as appropriate in order to obtain desired properties. When different types of block copolymers (B) are used, for example, but not limited to, the block copolymer (B) having the polymer block (b1) of the aromatic vinyl compound and at least one of the polymer block (b2) of the conjugated diene compound or isobutylene and the hydrogenation block (b3) may be used in combination with the block copolymer (B) having the polymer block (b1) of the aromatic vinyl compound, at least one of the polymer block (b2) of the conjugated diene compound or isobutylene and the hydrogenation block (b3), and the block (b4) having the functional group reactive with a hydroxyl group in its side chain.

When the block copolymer (B) includes multiple block copolymers (B), the acid value, styrene content, weight average molecular weight, and the like described above are average values calculated from the blending mass ratio.

Examples of commercially available products of the block copolymer (B) to be used in the present support material, that is, the block copolymer (B) having the reactive functional group, include "TUFTEC M Series" which is carboxyl-modified SEBS available from Asahi Kasei Corporation, "f-DYNARON" available from JSR Corporation, and "KRATON FG" available from Shell Japan Limited.

The proportion of the block copolymer (B) in the present support material is, for example, preferably 10 to 50% by mass of the total amount of the present support material (100% by mass), more preferably 15 to 48% by mass, even more preferably 18 to 45% by mass. If the proportion of the block copolymer (B) is too high, water solubility tends to decrease, and abnormal filament feeding and thermal deformation of the built object tend to occur due to excessive softening of the filament during building.

The content ratio (A/B) of the acid-modified PVA resin (A) to the block copolymer (B) in the present support material is preferably 55/45 to 85/15, more preferably 60/40 to 80/20, particularly preferably 65/35 to 75/25. If the proportion of the acid-modified PVA resin (A) is too high, buildability tends to decrease. If the proportion of the block copolymer (B) is too high, water solubility tends to decrease, and abnormal filament feeding during building and thermal deformation of the built object tend to occur.

The total proportion (A+B) of the acid-modified PVA resin (A) and the block copolymer (B) in the present support material is, for example, equal to or more than 60% by mass of the total amount of the present support material (100% by mass), preferably equal to or more than 80% by mass, more preferably equal to or more than 90% by mass, particularly preferably equal to or more than 98% by mass, most preferably 100% by mass.

The present support material has a phase-separated structure in which one of the acid-modified PVA resin (A) and the block copolymer (B) is a matrix and the other is finely dispersed in the matrix. Specifically, the present support material has a sea-island structure in which the acid-modified PVA resin (A) is a sea component and the block copolymer (B) is an island component. The average particle diameter of the block copolymer (B), which is the island component of the sea-island structure, is measured by observing the cross section of a melt-molded film formed using a resin composition by a scanning electron microscope (SEM). The average particle diameter is typically 0.3 to 10 µm, preferably 0.3 to 5 µm, particularly preferably 0.5 to 3 µm. If the average particle diameter is too small, flexibility tends to decrease, and if too large, it tends to be impossible to form a molded product.

### [Optional Ingredients]

The PVA resin contained in the present support material may include a PVA resin other than the specific acid-modified PVA resin (A) to be used in the present support material, such as an unmodified PVA resin, other modified PVA resins, and the like, as long as the effects of the present disclosure are not impaired. However, the proportion of these PVA resins is equal to or less than 30% by mass of the total amount of the PVA resins (100% by mass), preferably equal to or less than 10% by mass, more preferably equal to or less than 5% by mass, even more preferably equal to or less than 1% by mass.

The present support material may contain other thermoplastic resins as long as the effects of the present disclosure are not impaired. Examples of the other thermoplastic resins include olefin homopolymers and copolymers such as linear low-density polyethylenes, low-density polyethylenes, medium-density polyethylenes, high-density polyethylenes, ethylene-vinyl acetate copolymers, ionomers, ethylene-propylene copolymers, ethylene-α-olefin (α-olefin having 4 to 20 carbon atoms) copolymers, ethylene-acrylic ester copolymers, polypropylenes, propylene-α-olefin (α-olefin having 4 to 20 carbon atoms) copolymers, polybutenes, and polypentenes, polycycloolefins, and polyolefin resins in a broader sense, such as obtained by graft-modifying any of these olefin homopolymers and copolymers with an unsaturated carboxylic acid or an ester thereof, polystyrene resins, polyesters, polyamides, copolyamides, polyvinyl chloride, polyvinylidene chloride, acrylic resins, vinylester resins, polyurethane elastomers, chlorinated polyethylene, and chlorinated polypropylene. However, the proportion of these other thermoplastic resins is equal to or less than 10% by mass of the total amount of the support material, preferably equal to or less than 5% by mass, more preferably equal to or less than 3% by mass, even more preferably equal to or less than 1% by mass.

The present support material may contain a filler in terms of strength of the support material. The filler may be an organic filler or an inorganic filler. Examples of the organic filler include biodegradable fillers such as starch and cellulose. Examples of the inorganic filler include oxides, hydroxides, carbonates, sulfates, silicates, nitrides, carbons, and metals.

The organic filler typically has an average particle diameter of 0.1 to 50 µm, even more preferably 5 to 30 µm, particularly preferably 10 to 20 µm. The inorganic filler typically has an average particle diameter of 0.5 to 10 µm, even more preferably 1 to 5 µm, and particularly preferably 2 to 3 µm. The average particle diameter refers to the particle diameter D50 measured by laser diffraction.

The proportion of the filler is preferably 0.1 to 20% by mass of the total amount of the present support material (100% by mass), further preferably 0.5 to 10% by mass, particularly preferably 1 to 5% by mass.

The present support material may contain a plasticizer. The proportion of the plasticizer is, for example, equal to or less than 20% by mass of the total amount of the present support material (100% by mass), further preferably equal to or less than 10% by mass, more preferably equal to or less than 1% by mass, particularly preferably equal to or less than 0.1% by mass.

In addition to the above ingredients, the present support material may contain known additives such as an antioxidant, a colorant, an antistatic agent, and a UV absorber. However, the proportion of these ingredients is equal to or less than 10% by mass of the total amount of the present support material (100% by mass), more preferably equal to or less than 5% by mass, even more preferably equal to or less than 1% by mass.

### <Present Support Material and Production Method Thereof>

The present support material contains the acid-modified PVA resin (A) and the block copolymer (B) as described above. The present support material is provided as a uniformly mixed composition in the form of pellet produced by kneading the components (A) and (B) and, if necessary, other ingredients in predetermined amounts in a heated molten state in a twin-screw extruder. Preferably, the composition in the form of pellet is melt-kneaded by a single-screw extruder and extruded into a filament, which is cooled and wound on a reel to be provided as a support material.

Specifically, the composition in the form of pellet produced by melt-kneading in a twin-screw extruder is heated and melt-kneaded in a single-screw extruder, then extruded from a single-hole or multi-hole strand die into a filament with a diameter of 1.5 to 3.0 mm, and the filament is cooled and solidified by air cooling, and wound on a reel to be provided. The support material in the form of filament is convenient because it can be fed along with a target model material from respective nozzle heads and deposited layer by layer during additive manufacturing. The support material in the form of filament requires flexibility and toughness to the extent that it is not broken during winding on a reel, and requires rigidity to the extent that it can be fed to the head without delay during additive manufacturing. The present support material satisfies these requirements.

### <Method for Producing Additive Manufactured Object and Three-Dimensional Structure>

A three-dimensional structure having a desired shape can be produced by a production method including the steps of: depositing and solidifying the present support material and a model material in a molten state to produce an additive manufactured object; and bringing the additive manufactured object into contact with water.

In other words, the present support material can be used as a support material for additive manufacturing that is used for additive manufacturing and eventually removed.

Examples of the constituent material of the model material to which the present support material can be applied include, but not limited to, engineering plastics, super engineering plastics, polylactic acid (PLA), acrylonitrile-butadiene-styrene copolymer (ABS), polyamide (PA), polyethylene terephthalate (PET), glycol modified polyethylene terephthalate (PETG), polyhydroxyalkanoate (PHA), wood-filled composites, metal-filled composites, carbon fiber-filled composites, polyvinyl butyral (PVB), thermoplastic elastomer (TPE), thermoplastic polyurethane (TPU), polyolefin, polypropylene (PP), acrylonitrile styrene acrylate (ASA), polyacrylate, polymethacrylate, polystyrene (PS), polyoxymethylene (POM), and mixtures thereof. Among those, the present support material is particularly suitable as a support material for engineering plastics and super engineering plastics in terms of its excellent heat resistance.

The engineering plastics generally refer to plastics having a strength equal to or higher than 49.0 MPa and a flexural modulus equal to or higher than 2.4 GPa that can be used at high temperatures equal to or higher than 100°C for a long period of time. The super engineering plastics refer to plastics having a strength equal to or higher than 49.0 MPa and a flexural modulus equal to or higher than 2.4 GPa that can be used at high temperatures equal to or higher than 150°C for a long period of time.

Specific examples include polyphenyl sulfone (PPSU), polysulfone (PSU), polyarylate (PAR), polyetherimide (PEI), polyether ketone ketone (PEKK), polyether ether ketone (PEEK), polyphenylene sulfide (PPS), polyethersulfone (PES), polyamideimide (PAI), liquid crystal polymer (LCP), polyvinylidene fluoride (PVDF), polycarbonate (PC), polyamide (PA), polyacetal (POM), modified polyphenylene ether (m-PPE), and polybutylene terephthalate (PBT).

In the method for producing a three-dimensional structure, the additive manufacturing device that performs the step of producing an additive manufactured object is, for example, a fused deposition modeling device that has a plurality of heads capable of extruding a model material and a support material each in a thermally molten state.

In a case of a fused deposition modeling printer, the model material is typically formed into a strand or a filament and wound on a reel to be provided, in the same manner as a support material. The strands or filaments of the model material and the support material are fed to separate nozzle heads of the additive manufacturing device, heated and melted in the nozzle heads, and deposited on a platform.

When engineering plastics or super engineering plastics are used as the model material, the melt temperature at the nozzle head for the model material is typically 150 to 380°C with a deposition pitch of typically 0.01 to 0.8 mm, depending on the type of these engineering plastics, and the melt temperature at the nozzle head for the support material is typically 80 to 250°C with a deposition pitch of typically 0.01 to 0.8 mm.

When engineering plastics or super engineering plastics are used as the model material, the setting temperature of the platform in the closed system of the fused deposition modeling printer is typically 80 to 150°C, and the setting temperature of the chamber is typically 80 to 150°C.

The present disclosure is also preferably provided as a fused deposition modeling method using engineering plastics or super engineering plastics as the model material to be used with the present support material. In particular, the present disclosure is preferably provided as a fused deposition modeling method using a closed system of an additive manufacturing device with a chamber temperature set to equal to or higher than 60°C, especially 65 to 140°C.

The melt-extruded support material and model material are successively solidified by cooling, and the newly melt-extruded support material and model material are deposited and solidified on the solidified layer, resulting in an additive manufactured object including the target model material.

After the additive manufactured object is formed, the present support material is removed by washing with water from the additive manufactured object composed of the present support material and the model material having a three-dimensional shape. The removal of the present support material by washing with water may be performed by immersion in water or warm water in a container or by rinsing under running water. In the case of immersion, the water may be agitated or ultrasound may be applied in order to reduce removal time. The water temperature is preferably about 25 to 80°C. The water or warm water is used in the amount of 10 to 10000 times the mass of the support material for dissolution removal. By removing the support material from the additive manufactured object, a three-dimensional structure with a complex three-dimensional construction can be obtained.

In a preferred embodiment of the present support material, the polymerization degree and the modification degree of the polyvinyl alcohol resin used are controlled in the preferred ranges described above to achieve an optimal balance between fluidity and strength and between low crystallinity and heat resistance, which are in a trade-off relationship. The specific block copolymer (B) with a high styrene content is used to achieve particularly excellent buildability and heat resistance.

### EXAMPLES

The present disclosure will be described more specifically with examples below, but the present disclosure is not limited to the following examples within the scope of the present disclosure. In the examples, "part" and "%" are based on mass.

### [Production of Acid-Modified PVA Resin (a1)]

In a reaction vessel equipped with a reflux condenser, a dropping funnel, and a stirrer, 1000 parts by mass of vinyl acetate, 422 parts by mass of methanol, and 39 parts by mass of sodium allylsulfonate (2.3 mol% relative to vinyl acetate, 0.16% chlorine content) were charged. To the resulting mixture, 0.072 mol% (relative to the charged vinyl acetate) of azobisisobutyronitrile was added, and the temperature was raised under a nitrogen flow with stirring to allow polymerization to proceed under reflux.

During the polymerization, azobisisobutyronitrile was added four times each in the amount of 0.072 mol% (relative to the charged vinyl acetate), and when the polymerization rate of vinyl acetate reached 96.4%, the polymerization was terminated by adding 0.1 parts by mass of m-dinitrobenzene. Then, the unreacted vinyl acetate monomer was removed from the system by blowing methanol vapor, resulting in a methanol solution of the copolymer.

The resulting methanol solution of the copolymer was diluted with methanol to a concentration of 55% and fed to a kneader. While maintaining the solution temperature at 35°C, a methanol solution of sodium hydroxide (2% sodium concentration) was added in a proportion of 8 millimoles per mole of the vinyl acetate structural unit in the copolymer to allow saponification to proceed. As the saponification proceeded, the saponified product precipitated and formed particles, which were filtered out. The resulting particles were washed well with methanol and then dried in a hot-air dryer to obtain a resin composition containing an acid-modified PVA resin and chlorine. The sodium acetate content was 1.3 parts by mass per 100 parts by mass of the acid-modified PVA resin.

The resulting acid-modified PVA resin (a1) had a saponification degree of 88.0 mol%, a number average polymerization degree of 370, and a sulfonic acid modification degree of 1.54 mol%.

### [Production of Acid-Modified PVA Resin (a2)]

In a reaction vessel equipped with a reflux condenser, a dropping funnel, and a stirrer, 1000 parts by mass of vinyl acetate, 422 parts by mass of methanol, and 41 parts by mass of sodium allylsulfonate (2.4 mol% relative to vinyl acetate, 0.17% chlorine content) were charged. To the resulting mixture, 0.072 mol% (relative to the charged vinyl acetate) of azobisisobutyronitrile was added, and the temperature was raised under a nitrogen flow with stirring to allow polymerization to proceed under reflux.

During the polymerization, azobisisobutyronitrile was added four times each in the amount of 0.072 mol% (relative to the charged vinyl acetate), and when the polymerization rate of vinyl acetate reached 96.4%, the polymerization was terminated by adding 0.1 parts by mass of m-dinitrobenzene. Then, the unreacted vinyl acetate monomer was removed from the system by blowing methanol vapor, resulting in a methanol solution of the copolymer.

The resulting methanol solution of the copolymer was diluted with methanol to a concentration of 55% and fed to a kneader. While maintaining the solution temperature at 35°C, a methanol solution of sodium hydroxide (2% sodium concentration) was added in a proportion of 8 millimoles per mole of the vinyl acetate structural unit in the copolymer to allow saponification to proceed. As the saponification proceeded, the saponified product precipitated and formed particles, which were separated by filtration. The resulting particles were washed well with methanol and then dried in a hot-air dryer to obtain a resin composition containing an acid-modified PVA resin and chlorine. The sodium acetate content was 1.3 parts by mass per 100 parts by mass of the acid modified PVA resin.

The resulting acid-modified PVA resin (a2) had a saponification degree of 88.0 mol%, a number average polymerization degree of 352, and a sulfonic acid modification degree of 1.68 mol%.

### [Production of Acid-Modified PVA Resin (a3)]

In a reaction vessel equipped with a reflux condenser, a dropping funnel, and a stirrer, 1000 parts by mass of vinyl acetate, 422 parts by mass of methanol, and 50 parts by mass of sodium allylsulfonate (2.9 mol% relative to vinyl acetate, 0.21% chlorine content) were charged. To the resulting mixture, 0.072 mol% (relative to the charged vinyl acetate) of azobisisobutyronitrile was added, and the temperature was raised under a nitrogen flow with stirring to allow polymerization to proceed under reflux.

During the polymerization, azobisisobutyronitrile was added four times each in the amount of 0.72 mol% (relative to the charged vinyl acetate), and when the polymerization rate of vinyl acetate reached 96.4%, the polymerization was terminated by adding 0.1 parts by mass of m-dinitrobenzene. Then, the unreacted vinyl acetate monomer was removed from the system by blowing methanol vapor, resulting in a methanol solution of the copolymer.

The resulting methanol solution of the copolymer was diluted with methanol to a concentration of 55% and fed to a kneader. While maintaining the solution temperature at 35°C, a methanol solution of sodium hydroxide (2% sodium concentration) was added in a proportion of 8 millimoles per mole of the vinyl acetate structural unit in the copolymer to allow saponification to proceed. As the saponification proceeded, the saponified product precipitated and formed particles, which were separated by filtration. The resulting particles were washed well with methanol and then dried in a hot-air dryer to obtain a resin composition containing an acid-modified PVA resin and chlorine. The sodium acetate content was 1.3 parts by mass per 100 parts by mass of the acid-modified PVA resin.

The resulting acid-modified PVA resin (a3) had a saponification degree of 88.0 mol%, a number average polymerization degree of 380, and a sulfonic acid modification degree of 2.00 mol%.

### [Production of Acid-Modified PVA Resin (a4)]

In a reaction vessel equipped with a reflux condenser, a dropping funnel, and a stirrer, 1000 parts by mass of vinyl acetate, 422 parts by mass of methanol, and 30 parts by mass of sodium allylsulfonate (1.77 mol% relative to vinyl acetate, 0.12% chlorine content) were charged. To the resulting mixture, 0.072 mol% (relative to the charged vinyl acetate) of azobisisobutyronitrile was added, and the temperature was raised under a nitrogen flow with stirring to allow polymerization to proceed under reflux.

During the polymerization, azobisisobutyronitrile was added four times each in the amount of 0.72 mol% (relative to the charged vinyl acetate), and when the polymerization rate of vinyl acetate reached 96.4%, the polymerization was terminated by adding 0.1 parts by mass of m-dinitrobenzene. Then, the unreacted vinyl acetate monomer was removed from the system by blowing methanol vapor, resulting in a methanol solution of the copolymer.

The resulting methanol solution of the copolymer was diluted with methanol to a concentration of 55% and fed to a kneader. While maintaining the solution temperature at 35°C, a methanol solution of sodium hydroxide (2% sodium concentration) was added in a proportion of 8 millimoles per mole of the vinyl acetate structural unit in the copolymer to allow saponification to proceed. As the saponification proceeded, the saponified product precipitated and formed particles, which were filtered out. The resulting particles were washed well with methanol and then dried in a hot-air dryer to obtain a resin composition containing an acid-modified PVA resin and chlorine. The sodium acetate content was 1.3 parts by mass per 100 parts by mass of the acid-modified PVA resin.

The resulting acid-modified PVA resin (a4) had a saponification degree of 88.0 mol%, a number average polymerization degree of 370, and a sulfonic acid modification degree of 1.20 mol%.

### [Production of Acid-Modified PVA Resin (a5)]

In a reaction vessel equipped with a reflux condenser, a dropping funnel, and a stirrer, 1000 parts by mass of vinyl acetate, 422 parts by mass of methanol, and 12 parts by mass of sodium allylsulfonate (0.7 mol% relative to vinyl acetate, 0.05% chlorine content) were charged. To the resulting mixture, 0.072 mol% (relative to the charged vinyl acetate) of azobisisobutyronitrile was added, and the temperature was raised under a nitrogen flow with stirring to allow polymerization to proceed under reflux.

During the polymerization, azobisisobutyronitrile was added four times each in the amount of 0.072 mol% (relative to the charged vinyl acetate), and when the polymerization rate of vinyl acetate reached 96.4%, the polymerization was terminated by adding 0.1 parts by mass of m-dinitrobenzene. Then, the unreacted vinyl acetate monomer was removed from the system by blowing methanol vapor, resulting in a methanol solution of the copolymer.

The resulting methanol solution of the copolymer was diluted with methanol to a concentration of 55% and fed to a kneader. While maintaining the solution temperature at 35°C, a methanol solution of sodium hydroxide (2% sodium concentration) was added in a proportion of 8 millimoles per mole of the vinyl acetate structural unit in the copolymer to allow saponification to proceed. As the saponification proceeded, the saponified product precipitated and formed particles, which were filtered out. The resulting particles were washed well with methanol and then dried in a hot-air dryer, resulting in a resin composition containing a sulfonic acid or sulfonate group-containing PVA resin and chlorine. The sodium acetate content was 1.3 parts by mass per 100 parts by mass of the acid-modified PVA resin.

The resulting acid-modified PVA resin (a5) had a saponification degree of 88.0 mol%, a number average polymerization degree of 380, and a sulfonic acid modification degree of 0.5 mol%.

### [Production of 1,2-Diol-Modified PVA Resin (a'⁻¹)]

In a reaction vessel equipped with a reflux condenser, a dropping funnel, and a stirrer, 85 parts by mass of vinyl acetate (10% of the total was initially charged), 460 parts by mass of methanol, and 7.6 parts by mass of 3,4-diacetoxy-1-butene were charged. To the resulting mixture, 0.32 parts by mass of azobisisobutyronitrile was added, and the temperature was raised under a nitrogen flow with stirring to start polymerization. Furthermore, 0.5 hours after the start of polymerization, 765 parts by mass of vinyl acetate was added dropwise for 8 hours (dropping rate 95.6 parts/hr). At 2.5 hours and 4.5 hours after the start of polymerization, 0.2 parts by mass of azobisisobutyronitrile was added, and when the polymerization rate of vinyl acetate reached 85%, the polymerization was terminated by adding a predetermined amount of m-dinitrobenzene. Then, the unreacted vinyl acetate monomer was removed from the system by distillation while blowing methanol vapor, resulting in a methanol solution of the copolymer.

The solution was then diluted with methanol to adjust the solid concentration to 50%, and the methanol solution was fed to a kneader. While maintaining the solution temperature at 35°C, a methanol solution with 2% sodium content in sodium hydroxide was added in a proportion of 9 millimoles per mole of the total amount of a vinyl acetate structural unit and a 3,4-diacetoxy-1-butene structural unit in the copolymer to allow saponification to proceed. As the saponification proceeded, the saponified product precipitated and formed particles, and then the 2% methanol solution was added in the amount of 4 millimoles per mole of the total amount of the vinyl acetate structural unit and the 3,4-diacetoxy-1-butene structural unit to allow saponification to further proceed. Then, 0.8 equivalents of acetic acid based on sodium hydroxide was added for neutralization. The resulting product was filtered, washed well with methanol, and dried in a hot-air dryer, resulting in a PVA resin with a 1,2-diol structure in its side chain (side chain 1,2-diol-modified PVA resin (a'⁻¹)). The sodium acetate content was 1.3 parts by mass per 100 parts by mass of the side chain 1,2-diol-modified PVA resin.

The resulting 1,2-diol-modified PVA resin (a'⁻¹) had a saponification degree of 86 mol%, a number average polymerization degree of 380, and a 1,2-diol structural unit content of 4 mol%.

### [Production of 1,2-Diol-Modified PVA Resin (a'⁻²)]

In a reaction vessel equipped with a reflux condenser, a dropping funnel, and a stirrer, 85 parts by mass of vinyl acetate (10% of the total was initially charged), 460 parts by mass of methanol, and 5.7 parts by mass of 3,4-diacetoxy-1-butene were charged. To the resulting mixture, 0.32 parts by mass of azobisisobutyronitrile was added, and the temperature was raised under a nitrogen flow with stirring to start polymerization. Furthermore, 0.5 hours after the start of polymerization, 765 parts by mass of vinyl acetate was added dropwise for 8 hours (dropping rate 95.6 parts/hr). At 2.5 hours and 4.5 hours after the start of polymerization, 0.2 parts by mass of azobisisobutyronitrile was added, and when the polymerization rate of vinyl acetate reached 85%, the polymerization was terminated by adding a predetermined amount of m-dinitrobenzene. Then, the unreacted vinyl acetate monomer was removed from the system by distillation while blowing methanol vapor, resulting in a methanol solution of the copolymer.

The solution was then diluted with methanol to adjust the solid concentration to 50%, and the methanol solution was fed to a kneader. While maintaining the solution temperature at 35°C, a methanol solution with 2% sodium content in sodium hydroxide was added in a proportion of 9 millimoles per mole of the total amount of a vinyl acetate structural unit and a 3,4-diacetoxy-1-butene structural unit in the copolymer to allow saponification to proceed. As the saponification proceeded, the saponified product precipitated and formed particles, and then the 2% methanol solution was added in the amount of 4 millimoles per mole of the total amount of the vinyl acetate structural unit and the 3,4-diacetoxy-1-butene structural unit to allow saponification to further proceed. Then, 0.8 equivalents of acetic acid based on sodium hydroxide was added for neutralization. The resulting product was filtered, washed well with methanol, and dried in a hot-air dryer, resulting in a PVA resin with a 1,2-diol structure in its side chain (side chain 1,2-diol-modified PVA resin (a'⁻²)). The sodium acetate content was 1.3 parts by mass per 100 parts by mass of the side chain 1,2-diol-modified PVA resin.

The resulting 1,2-diol-modified PVA resin (a'⁻²) had a saponification degree of 88 mol%, a number average polymerization degree of 380, and a 1,2-diol structural unit content of 3 mol%.

### [Production of Unmodified PVA Resin (a'⁻³)]

In a reaction vessel equipped with a reflux condenser, a dropping funnel, and a stirrer, 1000 parts by mass of vinyl acetate, 520 parts by mass of methanol, and 0.15 mol% of azobisisobutyronitrile (relative to the charged vinyl acetate) were charged, and the temperature was raised under a nitrogen flow with stirring to allow polymerization to proceed under the boiling point for 5 hours. When the polymerization rate of vinyl acetate reached 85%, the polymerization was terminated by adding m-dinitrobenzene. The unreacted vinyl acetate monomer was then removed from the system by blowing methanol vapor, resulting in a methanol solution of PVA.

The resulting methanol solution was then diluted with methanol to a concentration of 50% and fed to a kneader. While maintaining the solution temperature at 35°C, a 2% methanol solution of sodium hydroxide was added in a proportion of 3.7 millimoles per mole of the vinyl acetate structural unit in the copolymer to allow saponification to proceed. As the saponification proceeded, the saponified product precipitated and formed particles, which were filtered out by solid-liquid separation.

The resulting unmodified PVA resin (a'⁻³) had a saponification degree of 76.2 mol% and a number average polymerization degree of 380.

### [Production of Unmodified PVA Resin (a'⁻⁴)]

In a reaction vessel equipped with a reflux condenser, a dropping funnel, and a stirrer, 1000 parts by mass of vinyl acetate, 520 parts by mass of methanol, and 0.15 mol% of azobisisobutyronitrile (relative to the charged vinyl acetate) were charged, and the temperature was raised under a nitrogen flow with stirring to allow polymerization to proceed under the boiling point for 5 hours. When the polymerization rate of vinyl acetate reached 85%, the polymerization was terminated by adding m-dinitrobenzene. The unreacted vinyl acetate monomer was then removed from the system by blowing methanol vapor, resulting in a methanol solution of PVA.

The resulting methanol solution was then diluted with methanol to a concentration of 50% and fed to a kneader. While maintaining the solution temperature at 35°C, a 2% methanol solution of sodium hydroxide was added in a proportion of 4.3 millimoles per mole of the vinyl acetate structural unit in the copolymer to allow saponification to proceed. As the saponification proceeded, the saponified product precipitated and formed particles, which were filtered out by solid-liquid separation.

The resulting unmodified PVA resin (a'⁻⁴) had a saponification degree of 88.0 mol% and a number average polymerization degree of 380.

### [Production of Unmodified PVA Resin (a'⁻⁵)

In a reaction vessel equipped with a reflux condenser, a dropping funnel, and a stirrer, 1000 parts by mass of vinyl acetate, 440 parts by mass of methanol, and 0.15 mol% of azobisisobutyronitrile (relative to the charged vinyl acetate) were charged, and the temperature was raised under a nitrogen flow with stirring to allow polymerization to proceed under the boiling point for 5 hours. When the polymerization rate of vinyl acetate reached 85%, the polymerization was terminated by adding m-dinitrobenzene. The unreacted vinyl acetate monomer was then removed from the system by blowing methanol vapor, resulting in a methanol solution of PVA.

The resulting methanol solution was then diluted with methanol to a concentration of 50% and fed to a kneader. While maintaining the solution temperature at 35°C, a 2% methanol solution of sodium hydroxide was added in a proportion of 4.3 millimoles per mole of the vinyl acetate structural unit in the copolymer to allow saponification to proceed. As the saponification proceeded, the saponified product precipitated and formed particles, which were filtered out by solid-liquid separation.

The resulting unmodified PVA resin (a'⁻⁵) had a saponification degree of 88.0 mol% and a number average polymerization degree of 360.

### Example 1

### [Production of Support Material]

First, 70 parts by mass of the acid-modified PVA resin (a1) and 30 parts by mass of a mixture prepared as the block copolymer (B) by preliminarily dry-blending a styrene-ethylene-butylene block copolymer (SEBS) having a carboxylic acid group ("TUFTEC M1943" available from Asahi Kasei Corporation, and having a styrene content of 20% by mass and an acid value of 10 mg CH₃ONa/g) and a styrene-ethylene-butylene block copolymer (SEBS) not having a carboxylic acid group ("TUFTEC H1043" available from Asahi Kasei Corporation, and having a styrene content of 67% by mass and an acid value of 0) in a mass ratio of 20:80 (TUFTEC M1943:TUFTEC H1043) (adjusted to an acid value of 2 mg CH₃ONa/g) were dry-blended, and then the resulting blend (having a styrene content of 57.6% by mass) was fed into a twin-screw extruder and melt-kneaded under the following conditions to be extruded into a strand having a diameter of 2 mm, resulting in a support material in the form of pellet.

### [Extrusion Conditions]

- Extruder: available from Technovel Corporation, with a diameter of 15 mm and L/D=60
- Extrusion temperatures:
   C1/C2/C3/C4/C5/C6/C7/C8/A/H=90/120/170/190/210/210/220/220/220/220 (°C)
- Screen mesh: 90/90 mesh
- Screw rotational speed: 200 rpm
- Extrusion rate: 2 kg/hour

The support material in the form of pellet produced as described above was fed to a single-screw extruder to form a filament under the following conditions, air-cooled on a belt, and wound onto a reel to produce a support material in the form of filament having a diameter of 2.85 mm.

### [Extrusion Conditions]

- Extruder: available from Technovel Corporation, with a diameter of 20 mm, L/D=25, and CR=3.5
- Extrusion temperatures: C1/C2/C3/A/H=190/210/220/220/220 (°C)
- Screen mesh: 90/90 mesh
- Screw rotational speed: 20 to 40 rpm
- Extrusion rate: 2.2 kg/hour

### [Evaluation of Water Solubility (Wash-Removability)]

The support material in the form of pellet produced as described above was cut into a length of 2 mm, and 5 g of the resulting cut product was placed in a 90-mesh wire mesh basket. The wire mesh basket was immersed in a hot water bath at 40°C with 500 mL under stirring (300 rpm), and the time taken for the pellets on the wire mesh basket to dissolve and disappear (complete dissolution time: minutes) was visually determined and evaluated according to the following criteria. If a residue was found on the wire mesh basket even after 120 minutes, the product was evaluated as "insoluble". The results are listed in Table 2 below.

### [Evaluation Criteria]

(Excellent) Complete dissolution within 40 minutes
(Very good) Complete dissolution over 40 minutes and within 60 minutes
(Good) Complete dissolution over 60 minutes and within 85 minutes
(Poor) Complete dissolution over 85 minutes and within 120 minutes, or insoluble

### [Evaluation of Heat Resistance]

The heat resistance of the support material was evaluated using a FDM dual-head 3D printer with a chamber (EVO available from Airwolf 3D). Specifically, first, the support material (filament) obtained as described above was set in the nozzle head (setting temperature 220°C), and the support material was fed with a chamber setting temperature of 30°C. If the feed of the support material by the feed roller stopped within 5 hours after the start of the feed of the support material (the support material did not come out of the nozzle head), the feed state under the temperature condition was determined as "abnormal" and the chamber setting temperature (30°C) was determined as abnormality occurrence temperature.

On the other hand, if the feed of the support material by the feed roller properly continued for more than 5 hours after the start of the feed of the support material, the feed state under the temperature condition (30°C) was determined as "normal".

Thereafter, only the chamber setting temperature among the above test conditions was changed stepwise to 40°C, 50°C, 60°C, and 65°C in this order, and the same test as described above was conducted to determine whether the feed state of the support material was normal or abnormal.

As a result of the above test, when the abnormality occurrence temperature was 30 to 65°C, that is, when the feed of the support material stopped within 5 hours after the start of the feed of the support material under any of chamber setting temperature conditions of 30°C, 40°C, 50°C, 60°C, or 65°C, the heat resistance was determined as being insufficient and rated as "(Poor)".

On the other hand, when the abnormality occurrence temperature was not confirmed, that is, when the feed of the support material continued for more than 5 hours after the start of the feed of the support material under all the conditions of 30°C, 40°C, 50°C, 60°C, and 65°C, the heat resistance was determined as being excellent and rated as "(Very good)". The results are listed in Table 2 below.

### [Evaluation of Buildability]

The buildability of the support material was evaluated using a FDM dual-head 3D printer with a chamber (Mini-Factory available from 3Dnatives) and using polyether ketone ketone (PEKK), which is a super engineering plastic, as the model material.

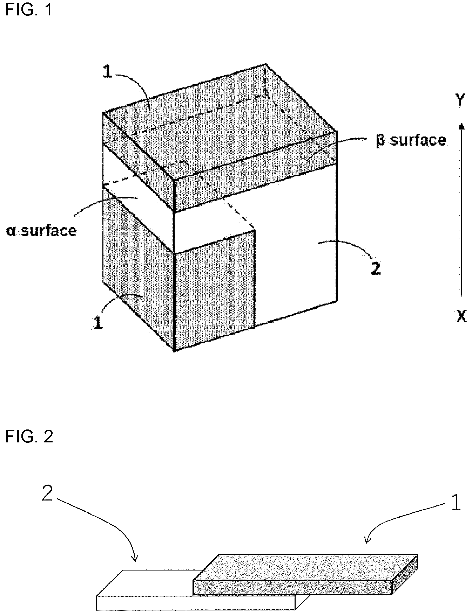

Specifically, the support material (filament) obtained as described above and the model material (filament, PEKK-A, with a diameter of 1.75 mm) were set in respective nozzle heads, and a layered structure shown in FIG. 1 was built under the following building conditions (deposition direction: successively deposited from X (platform) to Y direction as shown in FIG. 1). The buildability of the layered structure was evaluated according to the following criteria in terms of: (a) adhesion on the β surface (adhesion when the support material 1 was deposited on the model material 2); (b) adhesion on the α surface (adhesion when the model material 2 was deposited on the support material 1); and (c) adhesion on the platform (adhesion when the support material 1 was deposited on the platform and adhesion when the model material 2 was deposited on the platform). The results are listed in Table 2 below.

### [Building Conditions]

- Chamber setting temperature: 140°C
- Platform setting temperature: 140°C
- Nozzle head setting temperature: 340°C (for the model material), 220°C (for the support material)

### [Evaluation Criteria]

(Excellent) Adhesion is sufficient in all of (a) to (c) and good building is possible.
(Very good) Good building is possible but (a) the adhesion on the β surface is rather weak and the material peels off easily.
(Good) Basic building is possible but deformation or warping occurs.
(Poor) Building is impossible. (Building is impossible due to lack of adhesion between resins. Feeding is impossible due to excessive softening or clogging of the support material. Building is impossible due to thermal decomposition and foaming or breaking of the filament.)

### [Evaluation of Adhesion to General-Purpose Plastics]

The adhesion of the support material was evaluated using an FDM dual-head 3D printer (EVO available from Airwolf 3D), and using polypropylene (PP), which is a general-purpose plastic to which the water-soluble support material is least likely to adhere, as the model material.

Specifically, the support material (filament) obtained as described above and the model material (filament) (PP with a diameter of 2.85 mm available from Mitsubishi Chemical Corporation) were set in respective nozzle heads to build an additive manufactured object shown in FIG. 2. A support material 1 (width 12 mm, length 35 mm, height 5 mm) and a model material 2 (width 12 mm, length 35 mm, height 5 mm) were fixed to a fixing jig adjusted to a distance of 35 mm between chucks and pulled at a rate of 100 mm/min with a tensile tester (AG-IS available from Shimadzu Corporation) to measure a tensile strength (N) at an interlayer contact surface (width 12 mm, length 15 mm) of the additive manufactured object at 23°C and 50%RH. The tensile strength was evaluated according to the following criteria. The results are listed in Table 2 below.

The nozzle head setting temperature in the 3D printer was 220°C for the support material and 250°C for the model material.

### [Evaluation Criteria]

(Very good) 160 N or more
(Good) Less than 160N, 150 or more
(Poor) Less than 150N

### Example 2

A support material was produced and evaluated in the same manner as in Example 1 except that the proportion of the acid-modified PVA resin (a1) was changed to 60 parts by mass and the proportion of the block copolymer (B) was changed to 40 parts by mass in Example 1. The results are listed in Table 2 below.

### Example 3

A support material was produced and evaluated in the same manner as in Example 1 except that the acid-modified PVA resin (a1) was changed to the acid-modified PVA resin (a2) in Example 1. The results are listed in Table 2 below.

### Example 4

A support material was produced and evaluated in the same manner as in Example 1 except that the proportion of the acid-modified PVA resin (A) was changed to 80 parts by mass and the proportion of the block copolymer (B) was changed to 20 parts by mass in Example 1. The results are listed in Table 2 below.

### Example 5

A support material was produced and evaluated in the same manner as in Example 1 except that the acid-modified PVA resin (a1) was changed to the acid-modified PVA resin (a3) in Example 1. The results are listed in Table 2 below.

### Example 6

A support material was produced and evaluated in the same manner as in Example 1 except that the acid-modified PVA resin (a1) was changed to the acid-modified PVA resin (a4) in Example 1. The results are listed in Table 2 below.

### Example 7

A support material was produced and evaluated in the same manner as in Example 1 except that the acid-modified PVA resin (a1) was changed to the acid-modified PVA resin (a5) in Example 1. The results are listed in Table 2 below.

### Comparative Example 1

A support material was produced and evaluated in the same manner as in Example 1 except that the acid-modified PVA resin (a1) was changed to the 1,2-diol-modified PVA resin (a'⁻¹) in Example 1. The results are listed in Table 2 below.

### Comparative Example 2

A support material was produced and evaluated in the same manner as in Example 1 except that the acid-modified PVA resin (a1) was changed to the 1,2-diol-modified PVA resin (a'⁻²) in Example 1. The results are listed in Table 2 below.

### Comparative Example 3

A support material was produced and evaluated in the same manner as in Example 1 except that the acid-modified PVA resin (a1) was changed to the unmodified PVA resin (a'⁻³), and the block copolymer (B) was changed to a mixture prepared by preliminarily dry-blending a styrene-ethylene-butylene block copolymer (SEBS) having a carboxylic acid group and a styrene-ethylene-butylene block copolymer (SEBS) not having a carboxylic acid group in a mass ratio of 70:30 (adjusted to an acid value of 3 mg CH₃ONa/g) in Example 1. The results are listed in Table 2 below.

### Comparative Example 4

A support material was produced and evaluated in the same manner as in Example 1 except that the acid-modified PVA resin (a1) was changed to the unmodified PVA resin (a'⁻⁴), and the block copolymer (B) was changed to a mixture prepared by preliminarily dry-blending a styrene-ethylene-butylene block copolymer (SEBS) having a carboxylic acid group and a styrene-ethylene-butylene block copolymer (SEBS) not having a carboxylic acid group in a mass ratio of 70:30 (adjusted to an acid value of 3 mg CH₃ONa/g) in Example 1. The results are listed in Table 2 below.

### Comparative Example 5

A support material was produced and evaluated in the same manner as in Example 1 except that the acid-modified PVA resin (a1) was changed to the unmodified PVA resin (a'⁻⁵), and the block copolymer (B) was changed to a styrene-ethylene-butylene block copolymer (SEBS) alone ("TUFTEC M1911" available from Asahi Kasei Corporation, having a styrene content of 20% by mass and an acid value of 2 mg CH₃ONa/g) in Example 1. The results are listed in Table 1 below.

**Table 1**

| | PVA resin | | | | | Block copolymer | |
|---|---|---|---|---|---|---|---|
| | Type | Modification degree (mol%) | Polymerization degree | Saponificahon degree (mol%) | Proportion (parts) | Acid value (mgCH₃Ona/g) | Proportion (parts) |
| Example 1 | Acid-modified PVA resin (a1) | 1.54 | 370 | 88.0 | 70 | 2 | 30 |
| Example 2 | Acid-modified PVA resin (a1) | 1.54 | 370 | 88.0 | 60 | 2 | 40 |
| Example 3 | Acid-modified PVA resin (a2) | 1.68 | 352 | 88.0 | 70 | 2 | 30 |
| Example 4 | Acid-modified PVA resin (a1) | 1.54 | 370 | 88.0 | 80 | 2 | 20 |
| Example 5 | Acid-modified PVA resin (a3) | 2.00 | 380 | 88.0 | 70 | 2 | 30 |
| Example 5 | Acid-modified PVA resin (a4) | 1.20 | 370 | 88.0 | 70 | 2 | 30 |
| Example 7 | Acid-imodified PVA resin (a5) | 0.5 | 380 | 88.0 | 70 | 2 | 30 |
| Comparative Example 1 | 1,2-diol-modified PVA resin (a⁻¹) | 4 | 380 | 86.0 | 70 | 2 | 30 |
| Comparative Example 2 | 1,2-diol-modified PVA resin (a'⁻²) | 3 | 380 | 88.0 | 70 | 2 | 30 |
| Comparative Example 3 | Unmodified PVA resin (a'⁻³) | - | 380 | 76.2 | 70 | 3 | 30 |
| Comparative Example 4 | Unmodified PVA resin (a'⁻⁴) | - | 380 | 88.0 | 70 | 3 | 30 |
| Comparative Example 5 | Unmodified PVA resin (a'⁻⁵) | - | 360 | 88.0 | 70 | 2 | 30 |

**Table 2**

| | Evaluation item | | | |
|---|---|---|---|---|
| | Water solubility | Heat resistance | Buildability (Support buildability for engineering plastic) | Adhesion (Adhesive strength N to polypropylene resin) |
| Example 1 | Excellent | Very good | Excellent | Very good |
| Example 2 | Excellent | Very good | Excellent | Very good |
| Example 3 | Excellent | Very good | Excellent | Very good |
| Example 4 | Excellent | Very good | Very good | Very good |
| Example 5 | Excellent | Very good | Excellent | Very good |
| Example 6 | Very good | Very good | Excellent | Very good |
| Example 7 | Good | Very good | Excellent | Very good |
| Comparative Example 1 | Very good | Poor | Poor (Abnormal feeding due to excessive softening) | Very good |
| Comparative Example 2 | Excellent | Poor | Poor (Abnormal feeding due to excessive softening) | Good |
| Comparative Example 3 | Insoluble | Poor | Poor (Abnormal feeding due to excessive softening) | Very good |
| Comparative Example 4 | Poor | Very good | Poor (Abnormal feeding due to clogging) | Very good |
| Comparative Example 5 | Excellent | Poor | Poor (Abnormal feeding due to excessive softening) | Poor |

The above results show that the support materials of Examples 1 to 7 that satisfied the requirements of the present disclosure had excellent water solubility, heat resistance, buildability, and adhesion.

On the other hand, the support materials in Comparative Examples 1 to 5 that did not satisfy the requirements of the present disclosure were not satisfactory in the evaluation of at least one or more of water solubility, heat resistance, buildability, and adhesion.

While specific forms of the embodiments of the present disclosure have been shown in the above examples, the examples are merely illustrative and should not be interpreted in a limited sense.

### INDUSTRIAL APPLICABILITY

The support material according to the present disclosure is particularly useful when engineering plastic and the like is used as a model material because of its excellent heat resistance, water solubility, buildability, and adhesion, in particular, because of its excellent heat resistance.

### REFERENCE SIGNS LIST

- 1: support material
- 2: model material

## Claims

1. A support material comprising:
an acid-modified polyvinyl alcohol resin (A) with a modification degree of 0.01 to 10 mol%; and
a block copolymer (B) having
(i) a polymer block (b1) of an aromatic vinyl compound, and
(ii) at least one of
a polymer block (b2) of a conjugated diene compound or isobutylene, and
a hydrogenation block (b3) resulting from hydrogeneration of the conjugated diene compound or isobutylene.

2. The support material according to claim 1, wherein the acid-modified polyvinyl alcohol resin (A) is a sulfonic acid-modified polyvinyl alcohol resin (A1).

3. The support material according to claim 1 or 2, wherein the acid-modified polyvinyl alcohol resin (A) has a modification degree of 0.5 to 2.6 mol%.

4. The support material according to any one of claims 1 to 3, wherein the block copolymer (B) is present in a proportion of 10 to 50% by mass of a total amount of the support material.

5. The support material according to any one of claims 1 to 4, wherein a content ratio (A/B) of the acid-modified polyvinyl alcohol resin (A) to the block copolymer (B) is 55/45 to 85/15.

6. The support material according to any one of claims 1 to 5, wherein the acid-modified polyvinyl alcohol resin (A) has a saponification degree of 75 to 99.9 mol.% determined by the method mentioned in the specification.

7. The support material according to any one of claims 1 to 6, wherein the block copolymer (B) has an acid value of 0.5 to 10 mg CH₃ONa/g determined by the method mentioned in the specification.

8. The support material according to any one of claims 1 to 7, wherein the block copolymer (B) has a styrene content equal to or more than 50% by mass determined by the method mentioned in the specification.

9. A method for producing an additive manufactured object, the method comprising depositing the support material according to any one of claims 1 to 8 and a model material.

## Patentansprüche

1. Ein Trägermaterial, umfassend:
ein säuremodifiziertes Polyvinylalkoholharz (A) mit einem Modifikationsgrad von 0,01 bis 10 Mol-%; und
ein Blockcopolymer (B) mit
(i) einem Polymerblock (b1) aus einer aromatischen Vinylverbindung, und
(ii) mindestens einem aus
einem Polymerblock (b2) von einer konjugierten Dienverbindung oder Isobutylen, und
einem Hydrierungsblock (b3), der durch Hydrierung der konjugierten Dienverbindung oder des Isobutylen resultiert.

2. Das Trägermaterial gemäß Anspruch 1, wobei das säuremodifizierte Polyvinylalkoholharz (A) ein sulfonsäuremodifiziertes Polyvinylalkoholharz (A1) ist.

3. Das Trägermaterial gemäß Anspruch 1 oder 2, wobei das säuremodifizierte Polyvinylalkoholharz (A) einen Modifikationsgrad von 0,5 bis 2,6 Mol-% aufweist.

4. Das Trägermaterial gemäß einem der Ansprüche 1 bis 3, wobei das Blockcopolymer (B) in einem Anteil von 10 bis 50 Massen-% einer Gesamtmenge des Trägermaterials vorliegt.

5. Das Trägermaterial gemäß einem der Ansprüche 1 bis 4, wobei das Anteilverhältnis (A/B) des säuremodifizierten Polyvinylalkoholharzes (A) zum Blockcopolymer (B) von 55/45 bis 85/15 liegt.

6. Das Trägermaterial gemäß einem der Ansprüche 1 bis 5, wobei das säuremodifizierte Polyvinylalkoholharz (A) einen Verseifungsgrad von 75 bis 99,9 Mol-% aufweist, bestimmt nach dem in der Beschreibung genannten Verfahren.

7. Das Trägermaterial gemäß einem der Ansprüche 1 bis 6, wobei das Blockcopolymer (B) einen Säurewert von 0,5 bis 10 mg CH₃ONa/g aufweist, bestimmt nach dem in der Beschreibung genannten Verfahren.

8. Das Trägermaterial gemäß einem der Ansprüche 1 bis 7, wobei das Blockcopolymer (B) einen Styrolgehalt von 50 Massen-% oder mehr aufweist, bestimmt nach dem in der Beschreibung genannten Verfahren.

9. Ein Verfahren zur Herstellung eines additiv gefertigten Gegenstands, wobei das Verfahren das Aufbringen des Trägermaterials gemäß einem der Ansprüche 1 bis 8 und eines Modellmaterials umfasst.

## Revendications

1. Matériau de support comprenant :
une résine (A) de poly(alcool vinylique) modifiée par un acide ayant un degré de modification de 0,01 à 10 % en moles ; et
un copolymère à blocs (B) ayant
(i) un bloc de polymère (b1) d'un composé vinylique aromatique, et
(ii) au moins l'un parmi
un bloc de polymère (b2) d'un composé diène conjugué ou d'isobutylène, et
un bloc d'hydrogénation (b3) résultant de l'hydrogénation du composé diène conjugué ou de l'isobutylène.

2. Matériau de support selon la revendication 1, dans lequel la résine (A) de poly(alcool vinylique) modifiée par un acide est une résine (A1) de poly(alcool vinylique) modifiée par l'acide sulfonique.

3. Matériau de support selon la revendication 1 ou 2, dans lequel la résine (A) de poly(alcool vinylique) modifiée par un acide a un degré de modification de 0,5 à 2,6 % en moles.

4. Matériau de support selon l'une quelconque des revendications 1 à 3, dans lequel le copolymère à blocs (B) est présent en une proportion de 10 à 50 % en masse par rapport à la quantité totale du matériau de support.

5. Matériau de support selon l'une quelconque des revendications 1 à 4, dans lequel le rapport en teneur (A/B) de la résine (A) de poly(alcool vinylique) modifiée par un acide au copolymère à blocs (B) est de 55/45 à 85/15.

6. Matériau de support selon l'une quelconque des revendications 1 à 5, dans lequel la résine (A) de poly(alcool vinylique) modifiée par un acide a un degré de saponification, déterminé par la méthode mentionnée dans le fascicule, de 75 à 99,9 % en moles.

7. Matériau de support selon l'une quelconque des revendications 1 à 6, dans lequel le copolymère à blocs (B) a un indice d'acide, déterminé par la méthode mentionnée dans le fascicule, de 0,5 à 10 mg CH₃ONa/g.

8. Matériau de support selon l'une quelconque des revendications 1 à 7, dans lequel le copolymère à blocs (B) a une teneur en styrène, déterminée par la méthode mentionnée dans le fascicule, égale ou supérieure à 50 % en masse.

9. Méthode pour produire un objet fabriqué par fabrication additive, la méthode comprenant le dépôt du matériau de support selon l'une quelconque des revendications 1 à 8 et d'un matériau modèle.
